# EUROPÄISCHE PATENTSCHRIFT

(11) **EP 3 496 975 B1**
(45) Veröffentlichungstag und Bekanntmachung des Hinweises auf die Patenterteilung: **08.04.2020**
(21) Anmeldenummer: 18706242.7
(22) Anmeldetag: 15.02.2018
(51) Int. Cl.: B60R 16/023, H04L 12/40

(54) **KRAFTFAHRZEUG MIT EINEM IN MEHRERE GETRENNTE DOMÄNEN EINGETEILTEN DATENNETZWERK SOWIE VERFAHREN ZUM BETREIBEN DES DATENNETZWERKS**
MOTOR VEHICLE HAVING A DATA NETWORK WHICH IS DIVIDED INTO MULTIPLE SEPARATE DOMAINS AND METHOD FOR OPERATING THE DATA NETWORK
VÉHICULE AUTOMOBILE AYANT UN RÉSEAU DE DONNÉES DIVISÉ EN PLUSIERS DOMAINES SÉPARÉS ET PROCÉDÉ D'EXPLOITATION DU RÉSEAU DE DONNÉES

(30) Priorität: 28.02.2017 DE 102017203185
(43) Veröffentlichungstag der Anmeldung: 19.06.2019
(73) Patentinhaber: Audi AG, 85045 Ingolstadt (DE)
(72) Erfinder: SCHMIDT, Karsten, 85051 Ingolstadt (DE); FRIEDRICH, Felix, 81925 München (DE); BRUNNER, Martin, 81927 München (DE)
(86) Internationale Anmeldenummer: PCT/EP2018/053787
(87) Internationale Veröffentlichungsnummer: WO 2018/158084

(56) Entgegenhaltungen:
- EP-A1- 2 892 185
- US-A1- 2006 180 709

## Beschreibung

Die Erfindung betrifft ein Kraftfahrzeug mit einem Datennetzwerk, über welches mehrere Steuergeräte des Kraftfahrzeugs zum Austauschen von Nachrichtendaten miteinander gekoppelt sind. Zu der Erfindung gehört auch ein Verfahren zum Betreiben des Datennetzwerks.

In einem Kraftfahrzeug ist man daran interessiert, dessen Datennetzwerk schaltungstechnisch möglichst einfach und einheitlich auszugestalten. Hier ist eine einheitliche Netzwerk-Technologie von Vorteil. Andererseits ist man aus Sicherheitsüberlegungen heraus auch daran interessiert, Steuergeräte untereinander datentechnisch derart zu trennen, dass z.B. fahrsicherheitsrelevante Steuergeräte nicht durch andere Steuergeräte beeinflusst werden können, wenn diese defekt sind oder manipuliert wurden. Hier ist eine Einteilung eines Datennetzwerks in Domänen vorteilhaft, die beispielsweise im Stand der Technik auf der Grundlage verschiedener Bus-Technologien erreicht werden können. So können mehrere CAN-Stränge (CAN - Controller Area Network), ein FlexRay-Bus und ein Ethernet vorgesehen sein, die voneinander getrennte Domänen darstellen.

Bei solchen Domänen ergibt sich aber der Nachteil, dass es Signale oder Signaldaten gibt, die in mehreren oder sogar allen Domänen verfügbar sein müssen. Dies können generelle Informationen sein, wie zum Beispiel die aktuelle Uhrzeit, oder auch Funktionsdaten von Domänen-übergreifenden Funktionen, wie zum Beispiel das ferngesteuerte oder autonome Einparken oder eine Fahrzeugdiagnose. Es müssen also vorbestimmte generelle Informationen über Domänengrenzen hinweg verteilt werden können. Die Schwierigkeit besteht darin, diese generellen Informationen so im Datennetzwerk zu verteilen, dass die strikte Trennung von z.B. den fahrsicherheitsrelevanten Steuergeräten, oder allgemein ausgewählten oder vorbestimmten Steuergeräten, von den übrigen Steuergeräten erhalten bleibt und die Domänengrenzen durch die übertragenen generellen Informationen nicht aufgeweicht oder zum Beispiel für einen Hacker überwindbar werden. Das kontrollierte Übertragen von Nachrichtendaten mit generellen Informationen über Domänengrenzen oder Domänenübergänge hinweg, kann hierzu mittels eines Gateways erfolgen, was aber eine Übertragungslatenz aufgrund der Umsetzung der Nachrichtendaten durch das Gateway hervorrufen kann.

Aus der DE 100 27 006 A1 ist bekannt, dass in einem Kraftfahrzeug ein Steuergerät über ein Netzwerk identifiziert werden kann, um hierdurch seine Authentizität festzustellen.

Aus der DE 10 2007 010 264 A1 ist ein Mastergerät für eine Diagnose in einem Datennetzwerk eines Kraftfahrzeugs bekannt. Eine Sicherheit des Datennetzwerks wird durch dieses Gerät aber nicht sichergestellt.

Aus der DE 10 2014 207 389 A1 ist ein Verfahren bekannt, wie Nachrichtensignale unterschiedlicher Priorität derart im Verhältnis zueinander ausgestaltet sind, dass bei einer Kollision einer Nachricht mit hoher Priorität mit einer Nachricht niederer Priorität in dem Datennetzwerk die Nachricht mit hoher Priorität unverfälscht übertragen wird. Hierzu werden dominante und rezessive Signalpegel in den Datennetzwerk definiert.

Die EP 2 892 185 A1 offenbart ein Netzwerksystem, das eine Vielzahl von Kommunikationsvorrichtungen umfasst, wobei jede der Kommunikationsvorrichtungen in der Lage ist, eine VLAN-Einstellung unter Verwendung einer VLAN-Nummer vorzunehmen.

Die US 2006/180709 A1 offenbart ein Verfahren und ein System für die Zugbenennung über ein Internetprotokoll-basiertes Kommunikationsnetz. Netzwerk- und Konfigurationsinformationen werden für die Waggons des Zugs mithilfe eines Erkennungsprotokolls ermittelt.
Der Erfindung liegt die Aufgabe zugrunde, in einem Datennetzwerk eines Kraftfahrzeugs Steuergeräte-Gruppen voneinander zu trennen und dennoch das Verteilen von Nachrichtendaten mit generellen Informationen, die Domänen-übergreifend zu verteilen sind, effektiv und gesichert zu ermöglichen.

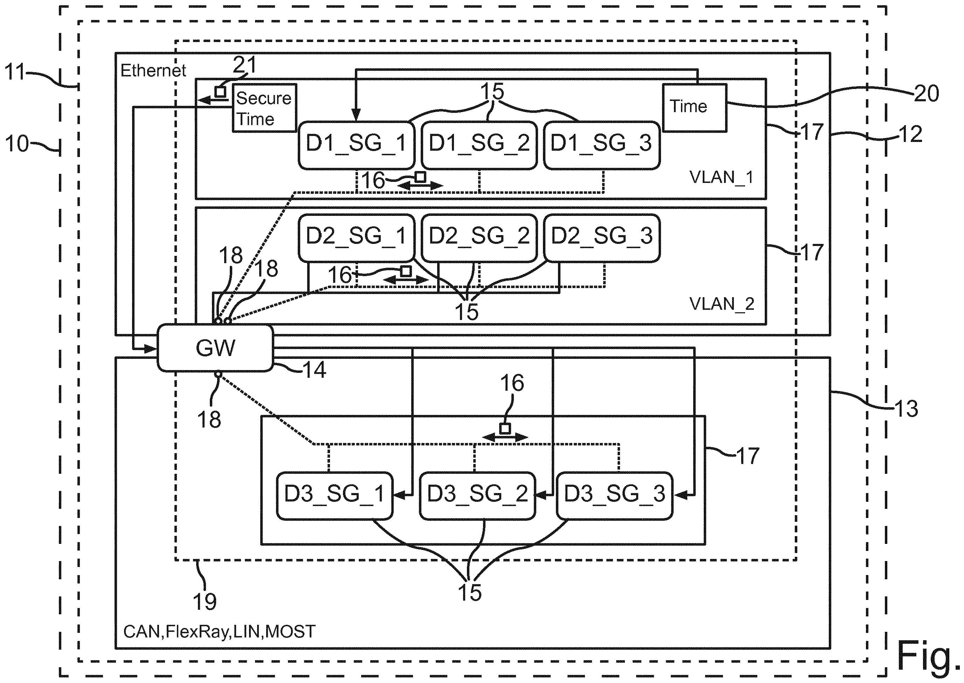

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Durch die Erfindung ist ein Kraftfahrzeug mit einem Datennetzwerk bereitgestellt. Über das Datennetzwerk sind mehrere Steuergeräte des Kraftfahrzeugs zum Austauschen von Nachrichtendaten miteinander gekoppelt. Solche Nachrichtendaten können z.B. zumindest ein Sensorsignal eines Sensors und/oder zumindest einen Steuerbefehl für einen Aktuator und/oder zumindest einen Zustandswert eines Steuergeräts enthalten. Das Datennetzwerk ist in unterschiedliche Domänen eingeteilt oder unterteilt. Über jede der Domänen sind jeweils einige der Steuergeräte an das Datennetzwerk angekoppelt. Die Domänen sind dabei bevorzugt überschneidungsfrei, das heißt jedes der Steuergeräte ist nur an eine der Domänen angekoppelt. Jeder der Domänen enthält als andere Steuergeräte. Eine Domäne kann z.B. durch einen Adressraum definiert sein, also eine jeweilige Menge von gültigen Geräteadressen zum Versenden und/oder Empfangen von Nachrichtendaten. Das Austauschen von Nachrichten zwischen den Steuergeräten innerhalb jeder Domäne ist dabei also hindernisfrei. Mit anderen Worten, in einer Domäne kann ein daran angekoppeltes Steuergerät jedes andere Steuergerät innerhalb der Domäne direkt mit Nachrichtendaten versorgen. Mit direkt ist hier gemeint, dass zwischen den Steuergeräten zwar optional auch ein Switch vorgesehen sein kann, der aber den Inhalt der Nachrichtendaten ungeprüft lässt. Zwischen unterschiedlichen Domänen ist dagegen das Austauschen von Nachrichtendaten vollständig blockiert oder nur abhängig von einer an zumindest einem Domänenübergang vorgesehenen Berechtigungsprüfung zugelassen. Eine solche Berechtigungsprüfung kann zum Beispiel ein Routing sein, das vorgegebene Routing-Regeln prüft, die festlegen, welches Steuergerät einer Domäne an welches andere Steuergerät in zumindest einer anderen Domäne aussenden oder übertragen darf. Durch diese Unterteilung in Domänen können also nur Steuergeräte innerhalb ihrer jeweiligen Domäne hindernisfrei miteinander Nachrichtendaten austauschen. Damit ist das beschriebene Trennen von Steuergeräten ermöglicht. So können zum Beispiel fahrsicherheitsrelevante Steuergeräte von Steuergeräten zum Beispiel der Unterhaltungselektronik getrennt werden, indem sie in unterschiedliche Domänen angekoppelt werden.

Um nun Nachrichtendaten mit generellen Informationen Domänen-übergreifend verteilen oder aussenden zu können, weist das Datennetzwerk zusätzlich eine Gesamtdomäne auf und jedes der Steuergeräte ist zusätzlich über die Gesamtdomäne an das Datennetzwerk angekoppelt. Die Gesamtdomäne ist ein zusätzlicher Adressraum. Jedes Steuergerät kann dann z.B. zwei Geräteadressen zum Versenden und/oder Empfangen von Nachrichtendaten aufweisen, eine für die Domäne und eine für die Gesamtdomäne. In der Gesamtdomäne sendet aber bevorzugt nur eines der Steuergeräte, wie weiter unten noch erläutert wird. Ein Steuergerät kann somit Nachrichtendaten entweder aus seiner eigenen Domäne oder aus der Gesamtdomäne empfangen. Da in der Gesamtdomäne jedes der Steuergeräte angekoppelt ist, können über die Gesamtdomäne hindernisfrei Nachrichtendaten zwischen Steuergeräten ausgetauscht werden, also direkt oder über einen Switch oder als Broadcast oder als Multicast. Um Nachrichtendaten von einem Steuergerät einer Domäne zu einem Steuergerät einer anderen Domäne zu übertragen, muss also kein Domänenübergang zwischen den beiden Domänen überwunden werden, sodass also zum Beispiel ein Routing oder ein Gateway unnötig ist oder allgemein eine Berechtigungsprüfung. Stattdessen können Domänen-übergreifende Nachrichtendaten über die Gesamtdomäne direkt von dem einen Steuergerät an das andere Steuergerät übertragen werden, also hindernisfrei, ohne eine Berechtigungsprüfung innerhalb der Gesamtdomäne. Die Domänen stellen also ein Subnetzwerk dar, die Gesamtdomäne erstreckt sich über mehrere dieser Domänen als übergeordnetes Gesamtnetzwerk.

Durch die Erfindung ergibt sich der Vorteil, dass die Domänen untereinander vollständig getrennt sein können, also das Übertragen von Nachrichtendaten zwischen unterschiedlichen Domänen an Domänengrenzen oder Domänenübergängen vollständig blockiert werden kann, und stattdessen Nachrichtendaten, die Domänen-übergreifend verteilt werden sollen, über eine separate Domäne, nämlich die Gesamtdomäne, an jedes Steuergerät übertragen werden können. Diese Nachrichtendaten können also als Domänen-interner Datenverkehr innerhalb der Gesamtdomäne versendet werden. Die Aussage, dass "alle der Steuergeräte" in der Gesamtdomäne zusammengefasst sind, ist so zu verstehen, dass in dem Kraftfahrzeug auch noch weitere Steuergeräte vorhanden sein können, die nicht Bestandteil der Gesamtdomäne sind. Für die Beschreibung der Erfindung ist hier nur die Gruppe derjenigen Steuergeräte des Kraftfahrzeugs betrachtet, die auch von der Gesamtdomäne umfasst sind.

Zu der Erfindung gehören auch Weiterbildungen, durch deren Merkmale sich zusätzliche Vorteile ergeben.

Bevorzugt erfolgt die Aufteilung des Datennetzwerks in Domänen rein logisch. Hierbei kann zumindest ein Teil des Datennetzwerks ein Ethernet-Netzwerk sein. Jede Domäne des Ethernet-Netzwerks und der das Ethernet-Netzwerk umfassende Teil der Gesamtdomäne ist jeweils als ein VLAN (Virtual Local Area Network) des Ethernet-Netzwerks ausgestaltet. Die Gesamtdomäne und die jeweiligen Domänen, in welche das Datennetzwerk unterteilt ist, können in einem gemeinsamen physikalischen Datennetzwerk, also auf gemeinsamen physikalischen Datenleitungen ihre jeweiligen Nachrichtendaten übertragen. Dennoch beeinflussen sich die Domänen untereinander und die Gesamtdomäne durch die logische Trennung mittels VLAN nicht. Die Trennung erfolgt anhand der MAC-Adressen (MAC - Media Access Control) und/oder IP-Adressen (IP - Internet Protocol), sodass jede Nachricht eindeutig einer Domäne oder der Gesamtdomäne zugeordnet werden kann. Das Einteilen in die Domänen und das Definieren der Gesamtdomäne kann durch Programmieren oder Konfigurieren von Switches erfolgen.

Damit sich innerhalb der Gesamtdomäne die Steuergeräte nicht gegenseitig ungewollt beeinflussen können, beispielsweise aufgrund eines Defekts oder einer Manipulation, ist vorgesehen, dass in der Gesamtdomäne nur eine unidirektionale Kommunikation von einem sendeberechtigten Steuergerät zu den übrigen Steuergeräten vorgesehen ist. Insbesondere ist nur ein einziges Steuergerät sendeberechtigt. Dieses wird im Folgenden auch als SIM (Secure Interdomain Master) bezeichnet. Um zu erreichen, dass Nachrichtendaten, die eines der übrigen Steuergeräte dennoch in der Gesamtdomäne aussendet (z.B. aufgrund des Defekts oder der Manipulation), weiterhin ohne Einfluss auf die übrigen Steuergeräte bleiben, akzeptieren in der Gesamtdomäne die übrigen Steuergeräte nur solche Nachrichtendaten als gültig, falls diese Nachrichtendaten von dem sendeberechtigten Steuergerät ausgesendet wurden. Nachrichtendaten von jedem anderen Steuergerät werden also ignoriert oder zumindest als ungültig klassifiziert.

Um eine Überprüfung des Absenders der Nachrichtendaten in der Gesamtdomäne für die übrigen Steuergeräte manipulationssicher zu machen, ist bevorzugt vorgesehen, dass das sendeberechtigte Steuergerät dazu eingerichtet ist, eine kryptographische Signierung und/oder Verschlüsselung der von ihm ausgesendeten Nachrichtendaten durchzuführen. Eine Signierung und/oder Verschlüsselung, die von den übrigen Steuergeräten überprüft werden kann, kann beispielsweise auf der Grundlage einer asymmetrischen Verschlüsselung (Public-Key/Private-Key-Verfahren) erreicht werden. Eine Signierung sieht hierbei vor, dass die Nachrichtendaten zwar unverschlüsselt übertragen werden, aber eine kryptographisch verschlüsselte Prüfsumme als Signatur mitübertragen wird. Alternativ dazu kann die (vollständige) Verschlüsselung der Nachrichtendaten selbst vorgesehen sein. Andere Steuergeräte akzeptieren aus der Gesamtdomäne dann nur solche Nachrichtendaten, die erfolgreich entschlüsselt und/oder anhand einer kryptogaphischen Prüfsumme verifiziert werden.

Bei nur einem einzigen sendeberechtigten Steuergerät dient dieses also als Nachrichtenverteiler. Das sendeberechtigte Steuergerät ist dabei bevorzugt dazu eingerichtet, aus mehreren der Domänen jeweilige Nachrichtendaten zu empfangen und über die Gesamtdomäne an zumindest eines der übrigen Steuergeräte auszusenden. Möchte ein erstes Steuergerät also Nachrichtendaten an zumindest ein anderes, zweites Steuergerät, das sich nicht in derselben Domäne befindet, aussenden oder verteilen, so kann das erste Steuergerät die Nachrichtendaten an das sendeberechtigte Steuergerät, d.h. den SIM, aussenden, welches diese dann über die Gesamtdomäne an das zumindest eine andere, zweite Steuergerät verteilen oder weiterleiten kann.

Ein besonderer Vorteil ergibt sich, wenn das sendeberechtigte Steuergerät die Nachrichtendaten an mehrere andere Steuergeräte über die Gesamtdomäne weiterleitet oder aussendet. Das sendeberechtigte Steuergerät ist hierbei bevorzugt dazu eingerichtet, bei den empfangenen Nachrichtendaten eine vorbestimmte Plausibilitätsprüfung und/oder Integritätsprüfung und/oder Authentizitätsprüfung durchzuführen. Hierdurch ergibt sich der Vorteil, dass die jeweilige Prüfung nur einmal durch das sendeberechtigte Steuergerät durchgeführt werden muss und nicht durch jedes der übrigen Steuergeräte, welche die Nachrichtendaten über die Gesamtdomäne empfangen. Die Plausibilitätsprüfung kann hierbei eine Prüfung dahingehend vorsehen, ob ein in den Nachrichtendaten signalisierter Wert, zum Beispiel ein Sensorwert, wie zum Beispiel eine Temperatur oder ein Lenkwinkel, innerhalb eines vorbestimmten Werteintervalls liegt. Andernfalls ist der Wert unplausibel. Eine Integritätsprüfung kann vorsehen, eine Sendeberechtigung des die Nachrichtendaten an das sendeberechtigte Steuergerät aussendenden Steuergeräts vorzunehmen. Hierdurch kann sichergestellt werden, dass die Nachrichtendaten nur von einem dazu berechtigten Steuergerät bereitgestellt werden. Eine Authentizitätsprüfung kann vorsehen, dass die Echtheit einer Identität, die das Senden des Steuergeräts beim Erzeugen der Nachrichtendaten angibt, auch tatsächlich das Steuergerät identifizieren. Schließt jemand an einer der Domänen ein zusätzliches Steuergerät an und sendet mit diesem unter Angabe einer falschen Identität oder Absenderadresse Nachrichtendaten aus, so kann dies durch die Authentizitätsprüfung erkannt werden.

Das sendeberechtigte Steuergerät muss nicht identisch sein mit einem Gateway, über welches die unterschiedlichen Domänen voneinander getrennt werden. Das sendeberechtigte Steuergerät kann also von einem den Domänenübergang zwischen den Domänen bildenden Gateway verschieden sein. In diesem Fall ist das Gateway dann bevorzugt dazu eingerichtet, Nachrichtendaten eines der übrigen Steuergeräte, das sich in einer der anderen Domänen befindet, an das sendeberechtigte Steuergerät ungeprüft weiterzuleiten. Hierdurch wird eine Latenz bei einer Überprüfung durch das Gateway vermieden. Da im sendeberechtigten Steuergerät die beschriebene Prüfung auf Plausibilität und/oder Integrität und/oder Authentizität durchgeführt werden, muss keine zusätzliche, unnötige Prüfung im Gateway erfolgen. Das sendeberechtigte Steuergerät kann zu seinem eigenen Schutz und zum Schutz der Gesamtdomäne zusätzlich noch eine Firewall aufweisen.

Mittels des sendeberechtigten Steuergeräts und der Gesamtdomäne kann in dem Kraftfahrzeug in der beschriebenen Weise die generelle Information für die Steuergeräte bereitgestellt werden, also eine Information für Steuergeräte unterschiedlicher Domänen. Insbesondere ist das sendeberechtigte Steuergerät dazu eingerichtet, aus einem jeweiligen der übrigen Steuergeräte Zeitsignaldaten einer Zeitgebereinheit (zum Beispiel einer Uhr) und/oder Geschwindigkeitsdaten einer Fahrgeschwindigkeit des Kraftfahrzeugs und/oder Lenkwinkeldaten eines Lenkwinkels des Kraftfahrzeugs und/oder Netzmanagementdaten des Datennetzwerks zu empfangen und an zumindest einige der übrigen Steuergeräte über die Gesamtdomäne zu verteilen oder weiterzusenden oder auszusenden. Mittels der Zeitsignaldaten können die Steuergeräte synchronisiert werden. Mittels der Netzwerkmanagementdaten kann das Ankoppeln der Steuergeräte an das Datennetzwerk gesteuert werden. Mittels der Geschwindigkeitsdaten und der Lenkwinkeldaten kann eine domänenübergreifende Funktionalität, wie beispielsweise eine Fahrerassistenz, bereitgestellt werden.

Indem nun die Domänen konsequent oder vollständig voneinander durch Blockieren oder zumindest Kontrollieren des Datenverkehrs an den Domänenübergängen getrennt werden können, ist auch eine besonders sichere Abkopplung des Datennetzes von einer fahrzeugfremden Datenquelle, wie beispielsweise einem z.B. mittels Bluetooth angekoppelten mobilen Endgerät (zum Beispiel einem Smartphone) und/oder einem Internet-Server möglich. Eine Entkopplung von Daten aus zumindest einer fahrzeugfremden Datenquelle ist möglich, indem die zumindest eine fahrzeugfremde Datenquelle über zumindest eine zusätzliche Domäne an das Datennetzwerk angekoppelt ist. Beispielsweise kann also ein WLAN-Router und/oder ein Bluetooth-Transponder und/oder ein Mobilfunkmodul jeweils als eigene Domäne verwaltet werden.

Das erfindungsgemäße Kraftfahrzeug ist bevorzugt als Kraftwagen, insbesondere als Personenkraftwagen oder Lastkraftwagen, ausgestaltet.

Durch den Betrieb des beschriebenen Datennetzwerks in dem Kraftfahrzeug ergibt sich das erfindungsgemäße Verfahren. Über das Datennetzwerk tauschen also mehrere Steuergeräte Nachrichtendaten miteinander aus und sind hierzu durch das Datennetzwerk gekoppelt. Das Datennetzwerk wird dabei in unterschiedliche Domänen unterteilt betrieben, also beispielsweise durch Bereitstellen mehrerer VLANs, von denen jedes eine Domäne darstellt. In jeder der Domänen werden jeweils einige der Steuergeräte an das Datennetzwerk angekoppelt. Im Falle eines VLANs ist also das Steuergerät in dem jeweiligen Ethernet-Subnetz des VLANs angemeldet oder registriert. Hierbei sind in jeder Domäne jeweils andere Steuergeräte enthalten. Das Austauschen von Nachrichtendaten zwischen den Steuergeräten innerhalb jeder Domäne ist dabei hindernisfrei, wie es beim VLAN in einem Ethernet bekannt ist. Zwischen unterschiedlichen Domänen ist das Austauschen von Nachrichtendaten entweder blockiert oder zumindest nur abhängig von einer an zumindest einem Domänenübergang vorgesehenen Berechtigungsprüfung zugelassen. Stattdessen ist der Domänen-übergreifende Austausch von Nachrichtendaten erfindungsgemäß dadurch erreicht, dass das Datennetzwerk zusätzlich eine Gesamtdomäne aufweist und jedes der Steuergeräte zusätzlich in der Gesamtdomäne an das Datennetzwerk angekoppelt wird. Ein Steuergerät kann also zum Beispiel in zwei unterschiedlichen VLANs angekoppelt sein, nämlich seiner eigenen Domäne und der Gesamtdomäne. Hierzu kann das Steuergerät zum Beispiel zwei unterschiedliche IP-Adressen (IP - Internetprotokoll) zum Versenden und/oder Empfangen von Nachrichtendaten aufweisen oder verwenden.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die Figur zeigt ein Kraftfahrzeug 10, bei dem es sich um einen Kraftwagen, insbesondere einem Personenkraftwagen oder Lastkraftwagen, handeln kann. Das Kraftfahrzeug 10 kann ein Datennetzwerk 11 aufweisen, dass ein Ethernet-Netzwerk 12 (Ethernet) und optional einen Datenbus 13 aufweisen kann, der eine oder mehrere unterschiedliche Bus-Technologien umfassen kann, wie zum Beispiel CAN, FlexRay, LIN (Local Interconnect Network) und/oder MOST (Media Oriented Systems Transport). Das Ethernet 12 und das Bussystem 13 können über ein Gateway 14 (GW) miteinander gekoppelt oder verbunden sein. Mittels des Datennetzwerks 11 können Steuergeräte 15 Nachrichtendaten 16 untereinander austauschen. Hierbei ist sichergestellt, dass nicht jedes Steuergerät 15 jedes andere Steuergerät 15 mit seinen Nachrichtendaten 16 erreichen kann und hierdurch potentiell den Betrieb des anderen Steuergeräts 15 beeinträchtigen kann. Das Datennetzwerk 11 ist hierzu in Domänen 17 unterteilt, was innerhalb des Ethernet-Netzwerks 12 durch ein jeweiliges VLAN (VLAN_1, VLAN_2) bewirkt sein kann. Ein Datenbus des Kraftfahrzeugs 11 kann hierbei jeweils eine Domäne 17 darstellen. Domänengrenzen können jeweils durch das Gateway 14 gebildet sein. Domänenübergänge 18 werden jeweils durch das Gateway 14 gebildet.

Die Steuergeräte sind durch Bezeichnungen voneinander unterschieden, welche die jeweilige Domäne 17 (D1, D2, D3) und innerhalb der jeweiligen Domäne 17 eine Ordnungsnummer des Steuergeräts (SG_1, SG_2, SG_3) angeben.

In dem Kraftfahrzeug 10 ist in dessen Datennetzwerk 11 eine zusätzliche Gesamtdomäne 19 gebildet, in welcher eines der Steuergeräte 15, dass hier als SIM (Security Interdomain Master) bezeichnet ist, und dass in der Gesamtdomäne 19 sendeberechtigtes Steuergerät darstellt, aussenden darf. Beispielhaft ist hier angegeben, dass eines der Steuergeräte 15 ein Zeitsignal "Time" zu Synchronisierung der Steuergeräte 15 erzeugt und entsprechende Zeitsignaldaten 20 an das sendeberechtigte Steuergerät SIM sendet. Das sendeberechtigte Steuergerät SIM kann die Zeitsignaldaten 20 des Zeitsignals "Time" oder allgemein die empfangenen Nachrichtendaten überprüfen, beispielsweise auf Plausibilität und/oder Integrität und/oder Authentizität) und dann in der Gesamtdomäne 19 an die übrigen Steuergeräte 15 als geprüfte Nachrichtendaten 21 aussenden. Beispielsweise kann das Gateway 14 die geprüfte Nachrichtendaten 21 ("Secure Time") in die jeweiligen Domänen 17, also die VLAN des Ethernets 12 und in den Datenbus 13 aussenden. Im Datenbus 13 können die Nachrichtendaten 21 beispielsweise als Broadcast ausgesendet werden.

Der SIM ist somit ein Sicherheitsanker im Fahrzeugnetz und fusioniert bestimmte im gesamten Fahrzeugnetz verfügbare Daten. Außerdem kann er diese Daten entsprechend plausibilisieren. Weiterhin sind zusätzliche Maßnahmen der Authentizitäts- und Integritätssicherung für alle hier verschickten Nachrichtendaten möglich. Diese werden dann über ein spezielles VLAN an alle anderen Empfänger verteilt. In diesem VLAN darf nur der SIM schreibend agieren. Damit ist kein Routing zwischen VLAN notwendig, das GW kann nach Überprüfung der Integrität eines Frames oder allgemein Nachrichtendaten ein einfaches Switching betreiben. Dabei ist irrelevant, dass das Zeitsignal gleichzeitig auch innerhalb des VLAN_1 ungesichert verteilt wird und die Steuergeräte dieses Signal nur Anhand des SIM regelmäßig validieren oder ob sie, wie im Bild gezeigt, ausschließlich das Signal von SIM erhalten.

Die sich ergebenden technischen Vorteile sind insbesondere:
- Bereitstellung eines Standardsatzes an generellen Informationen im Fahrzeugnetzwerk.
- Kein kompliziertes Routing zwischen unterschiedlichen VLANs für generelle Informationen die viele Steuergeräte benötigen.
- Da kein Routing zwischen VLANs notwendig ist, können Latenzanforderungen für diese generellen Informationen einfacher eingehalten werden.
- Klare Entkopplung von Datenverkehr, der von außen in das Fahrzeug kommt und Aktionen, die dadurch im Fahrzeug ausgelöst werden.
- Validierung kritischer Signale.
- Werden die Daten von einem korrumpierten SG oder Switch auf dem Transportweg verändert, ließe sich relativ exakt feststellen, wo dies geschehen ist, da jeder Switch und jedes SG die Integrität der Daten prüfen kann.

Erreicht wird dies insbesondere durch die folgenden Besonderheiten:
- Unidirektionale Verbindung im SIM-VLAN (Gesamtdomäne). Nur vom SIM zu einem Signalempfänger (anderes Steuergerät).
- Nur SIM muss im besonderen Maße technisch und prozesstechnisch gehärtet werden.
- SIM ist das zentrale Steuergerät, das eine kryptographische Integritätssicherung seiner versendeten Nachrichtendaten vornimmt.
- SIM kennt einen Teil der Applikationslogik und kann so die Plausibilität der erhaltenen Signale in einem vorgegebenen Rahmen validieren.
- SIM hat im besten Fall weitere Messwerte, mit denen er die Signale zusätzlich abgleichen kann.
- SIM kann außerdem eine besonders abgesicherte Firewall besitzen. So kann das GW, falls der SIM in einem anderen VLAN als der Signalgeber operiert, Nachrichtendaten grundsätzlich ohne oder mit geringfügiger Prüfung an diesen weiterleiten. Ansonsten wäre hier der Zeitvorteil wieder verloren.

Insgesamt zeigen die Beispiele, wie durch die Erfindung ein Sicherheitshauptgerät (SIM - Security Interdomain Master) in einem Ethernet-basierten Fahrzeug-Datennetzwerk bereitgestellt werden kann.

## Patentansprüche

1. Kraftfahrzeug (10) mit einem Datennetzwerk (11), über welches mehrere Steuergeräte (15) des Kraftfahrzeugs (10) zum Austauschen von Nachrichtendaten (16, 21) miteinander gekoppelt sind, wobei das Datennetzwerk (11) in unterschiedliche Domänen (17) unterteilt ist und über jede der Domänen (17) jeweils einige der Steuergeräte (15) an das Datennetzwerk (11) angekoppelt sind und hierbei in jeder Domäne (17) jeweils andere der Steuergeräte (15) enthalten sind und Domänenübergänge (18) jeweils durch ein Gateway (14) gebildet sind und das Gateway (14) das Austauschen von Nachrichtendaten (16, 21) zwischen den Steuergeräten (15) unterschiedlicher Domänen (17) blockiert oder nur abhängig von einer an zumindest einem Domänenübergang (18) vorgesehenen Berechtigungsprüfung zugelassen ist, wobei das Datennetzwerk (11) zusätzlich eine Gesamtdomäne (19) aufweist und jedes der Steuergeräte (15) zusätzlich über die Gesamtdomäne (19) an das Datennetzwerk (11) angekoppelt ist, wobei die Gesamtdomäne (19) ein zusätzlicher Adressraum ist,
**dadurch gekennzeichnet, dass**
in der Gesamtdomäne (19) nur eine unidirektionale Kommunikation von einem sendeberechtigten Steuergerät (SIM) zu den übrigen Steuergeräten (15) vorgesehen ist und in der Gesamtdomäne (19) die übrigen Steuergeräte (15) nur solche Nachrichtendaten (21) als gültig akzeptieren, die von dem sendeberechtigten Steuergerät (SIM) ausgesendet wurden.

2. Kraftfahrzeug (10) nach Anspruch 1, wobei zumindest ein Teil des Datennetzwerks (11) ein Ethernet-Netzwerk (12) ist und jede Domäne (17) des Ethernet-Netzwerks (12) und der das Ethernet-Netzwerk (12) umfassende Teil der Gesamtdomäne (19) jeweils als ein VLAN ausgestaltet ist.

3. Kraftfahrzeug (10) nach einem der vorhergehenden Ansprüche, wobei das sendeberechtigte Steuergerät (SIM) dazu eingerichtet ist, eine kryptographische Signierung und/oder Verschlüsselung der von dem sendeberechtigten Steuergerät (SIM) ausgesendeten Nachrichtendaten (21) durchzuführen.

4. Kraftfahrzeug (10) nach einem der vorhergehenden Ansprüche, wobei das sendeberechtigte Steuergerät (SIM) dazu eingerichtet ist, aus mehreren der Domänen (17) jeweilige Nachrichtendaten (16) zu empfangen und über die Gesamtdomäne (19) an zumindest eines der übrigen Steuergeräte (15) auszusenden.

5. Kraftfahrzeug (10) nach Anspruch 4, wobei das sendeberechtigte Steuergerät (SIM) dazu eingerichtet ist, bei den empfangenen Nachrichtendaten (16) eine vorbestimmte Plausibilitätsprüfung und/oder Integritätsprüfung und/oder Authentizitätsprüfung durchzuführen.

6. Kraftfahrzeug (10) nach einem der Ansprüche 4 oder 5, wobei das sendeberechtigte Steuergerät (SIM) von einem den jeweiligen Domänenübergang (18) zwischen den Domänen (17) bildenden Gateway (14) verschieden ist und das Gateway (14) dazu eingerichtet ist, Nachrichtendaten (16) eines der übrigen Steuergeräte (15) aus einer der Domänen (17) an das sendeberechtigte Steuergerät (SIM) ungeprüft weiterzuleiten.

7. Kraftfahrzeug (10) nach einem der Ansprüche 4 bis 6, wobei sendeberechtigte Steuergerät (SIM) dazu eingerichtet ist, aus einem jeweiligen der übrigen Steuergeräte (15) Zeitsignaldaten einer Zeitgebereinheit und/oder Geschwindigkeitsdaten einer Fahrgeschwindigkeit des Kraftfahrzeugs (10) und/oder Lenkwinkeldaten eines Lenkwinkels des Kraftfahrzeugs (10) und/oder Netzwerkmanagementdaten des Datennetzwerks (11) zu empfangen und an zumindest einige der übrigen Steuergeräte (15) über die Gesamtdomäne (19) zu verteilen.

8. Kraftfahrzeug (10) nach einem der vorhergehenden Ansprüche, wobei eine Entkopplung von Daten aus zumindest einer fahrzeugfremden Datenquelle vorgesehen ist, indem die zumindest eine fahrzeugfremde Datenquelle über eine eigene Domäne an das Datennetzwerk (11) angekoppelt ist.

9. Verfahren zum Betreiben eines Datennetzwerks (11) eines Kraftfahrzeugs (10), wobei über das Datennetzwerk (11) mehrere Steuergeräte (15) zum Austauschen von Nachrichtendaten (16, 21) miteinander gekoppelt werden und das Datennetzwerk (11) in unterschiedliche Domänen (17) unterteilt betrieben wird und über jede der Domänen (17) jeweils einige der Steuergeräte (15) an das Datennetzwerk (11) angekoppelt werden und hierbei in jeder Domäne (17) jeweils andere der Steuergeräte (15) enthalten sind und Domänenübergänge (18) jeweils durch ein Gateway (14) gebildet werden und das Gateway (14) das Austauschen von Nachrichtendaten (16, 21) zwischen den Steuergeräten (15) unterschiedlicher Domänen (17) blockiert oder nur abhängig von einer an zumindest einem Domänenübergang (18) vorgesehenen Berechtigungsprüfung zugelassen wird,
in dem Datennetzwerk (11) zusätzlich eine Gesamtdomäne (19) bereitstellt und jedes der Steuergeräte (15) zusätzlich über die Gesamtdomäne (19) an das Datennetzwerk (11) angekoppelt wird, wobei die Gesamtdomäne (19) ein zusätzlicher Adressraum ist,
**dadurch gekennzeichnet, dass**
in der Gesamtdomäne (19) nur eine unidirektionale Kommunikation von einem sendeberechtigten Steuergerät (SIM) zu den übrigen Steuergeräten (15) vorgesehen ist und in der Gesamtdomäne (19) die übrigen Steuergeräte (15) nur solche Nachrichtendaten (21) als gültig akzeptieren, die von dem sendeberechtigten Steuergerät (SIM) ausgesendet wurden.

## Claims

1. Motor vehicle (10) having a data network (11), via which several control devices (15) of the motor vehicle (10) are coupled with another for exchanging message data (16, 21), wherein the data network (11) is divided into different domains (17) and via each of the domains (17) in each case several of the control devices (15) are coupled to the data network (11) and in this regard in each domain (17) in each case other ones of the control devices (15) are contained and domain transitions (18) are formed respectively by one gateway (14) and the gateway (14) blocks the exchange of message data (16, 21) between the control devices (15) of different domains (17) or is permitted only depending on an authorisation provided at least one domain transition (18), wherein
the data network (11) has additionally a total domain (19) and each of the control devices (15) is coupled additionally via the total domain (19) to the data network (11), wherein the total domain (19) is an additional address space,
**characterised in that**
in the total domain (19) is provided only an unidirectional communication from a control device (SIM), which is entitled to send, to the remaining control devices (15) and in the total domain (19) the remaining control devices (15) accept only those message data (21) as valid which were sent from the control device (SIM) which is entitled to send.

2. Motor vehicle (10) according to claim 1, wherein at least a part of the data network (11) is an ethernet network (12) and each domain (17) of the ethernet network (12) and the part of the total domain (19) comprising the ethernet network (12) are in each case configured as a VLAN.

3. Motor vehicle (10) according to any of the preceding claims, wherein the control device (SIM) which is entitled to send is configured to carry out a cryptographic signing and/or encoding of the message data (21) sent from the control device (SIM) which is entitled to send.

4. Motor vehicle (10) according to any of the preceding claims, wherein the control device (SIM) which is entitled to send is configured to receive respectively message data (16) from several of the domains (17) and to send them via the total domain (19) to at least one of the remaining control devices (15).

5. Motor vehicle (10) according to claim 4, wherein the control device (SIM) which is entitled to send is configured in the case of the received message data (16) to carry out a predetermined plausibility test and/or integrity test and/or authenticity test.

6. Motor vehicle (10) according to any of claims 4 or 5, wherein the control device (SIM) which is entitled to send is different from a gateway (14) forming the respective domain transition (18) between the domains (17), and the gateway (14) is configured to forward, without checking, message data (16) of one of the remaining control devices (15) from one of the domains (17) to the control device (SIM) which is entitled to send.

7. Motor vehicle (10) according to any of claims 4 to 6, wherein control device (SIM) which is entitled to send is configured to receive from any one of the remaining control devices (15), and to distribute to at least several of the remaining control devices (15) via the total domain (19), time signal data of a timing unit and/or speed data of a driving speed of the motor vehicle (10) and/or steering angle data of a steering angle of the motor vehicle (10) and/or network management data of the data network (11).

8. Motor vehicle (10) according to any of the preceding claims, wherein a decoupling of data from at least one non-vehicle data source is provided, in that the at least one non-vehicle data source is coupled via its own domain to the data network (11).

9. Method for operating a data network (11) of a motor vehicle (10), wherein via the data network (11) several control devices (15) are coupled with one another for exchanging message data (16, 21) and the data network (11) is operated divided into different domains (17) and via each of the domains (17) in each case some of the control devices (15) are coupled to the data network (11) and in this regard in each domain (17) are contained respectively other ones of the control devices (15), and domain transitions (18) are formed respectively by a gateway (14) and the gateway (14) blocks the exchange of message data (16, 21) between the control devices (15) of different domains (17) or is permitted only depending on an authorisation provided at at least one domain transition (18),
in the data network (11) in addition a total domain (19) is provided and each of the control devices (15) is coupled additionally via the total domain (19) to the data network (11), wherein the total domain (19) is an additional address space,
**characterised in that**
in the total domain (19) is provided only a unidirectional communication from a control device (SIM), which is entitled to send, to the remaining control devices (15) and in the total domain (19) the remaining control devices (15) accept only those message data (21) as valid which were sent from the control device (SIM) which is entitled to send.

## Revendications

1. Véhicule automobile (10) avec un réseau de données (11) par le biais duquel plusieurs appareils de commande (15) du véhicule automobile (10) sont couplés pour l'échange de données de message (16, 21) entre eux, dans lequel le réseau de données (11) est divisé en différents domaines (17) et par le biais de chacun des domaines (17) respectivement quelques-uns des appareils de commande (15) sont couplés au réseau de données (11) et ici dans chaque domaine (17) respectivement d'autres des appareils de commande (15) sont inclus et des passages de domaine (18) sont formés respectivement par une passerelle (14) et la passerelle (14) bloque l'échange de données de message (16, 21) entre les appareils de commande (15) de différents domaines (17) ou est autorisée seulement en fonction d'une vérification d'autorisation prévue au niveau d'au moins un passage de domaine (18), dans lequel
le réseau de données (11) présente en outre un domaine entier (19) et chacun des appareils de commande (15) est en outre couplé par le domaine entier (19) au réseau de données (11), dans lequel le domaine entier (19) est un espace d'adresse supplémentaire,
**caractérisé en ce que**
seule une communication unidirectionnelle d'un appareil de commande (SIM) autorisé à émettre aux appareils de commande (15) restants est prévue dans le domaine entier (19) et dans le domaine entier (19) les appareils de commande (15) restants acceptent comme valables seulement de telles données de message (21) qui ont été émises par l'appareil de commande (SIM) autorisé à émettre.

2. Véhicule automobile (10) selon la revendication 1, dans lequel au moins une partie du réseau de données (11) est un réseau Ethernet (12) et chaque domaine (17) du réseau Ethernet (12) et la partie comprenant le réseau Ethernet (12) du domaine entier (19) est configurée respectivement comme un VLAN.

3. Véhicule automobile (10) selon l'une quelconque des revendications précédentes, dans lequel l'appareil de commande (SIM) autorisé à émettre est aménagé afin de réaliser une signature cryptographique et/ou codage des données de message (21) émises par l'appareil de commande (SIM) autorisé à émettre.

4. Véhicule automobile (10) selon l'une quelconque des revendications précédentes, dans lequel l'appareil de commande (SIM) autorisé à émettre est aménagé afin de recevoir à partir de plusieurs des domaines (17) des données de message respectives (16) et de les envoyer par le domaine entier (19) à au moins un des appareils de commande (15) restants.

5. Véhicule automobile (10) selon la revendication 4, dans lequel l'appareil de commande (SIM) autorisé à émettre est aménagé afin de réaliser pour les données de message (16) reçues une vérification de vraisemblance et/ou vérification d'intégrité et/ou vérification d'authenticité prédéterminée.

6. Véhicule automobile (10) selon l'une quelconque des revendications 4 ou 5, dans lequel l'appareil de commande (SIM) autorisé à émettre est différent d'une passerelle (14) formant le passage de domaine (18) respectif entre les domaines (17) et la passerelle (14) est aménagée afin de transmettre des données de message (16) d'un des appareils de commande (15) restants à partir d'un des domaines (17) à l'appareil de commande (SIM) autorisé à émettre sans vérification.

7. Véhicule automobile (10) selon l'une quelconque des revendications 4 à 6, dans lequel appareil de commande (SIM) autorisé à émettre est aménagé afin de recevoir à partir d'un respectif des appareils de commande (15) restants des données de signal de temps d'une unité de minuterie et/ou des données de vitesse d'une vitesse de déplacement du véhicule automobile (10) et/ou des données d'angle de direction d'un angle de direction du véhicule automobile (10) et/ou des données de gestion de réseau du réseau de données (11) et de les répartir au niveau d'au moins quelques-uns des appareils de commande (15) restants par le domaine entier (19).

8. Véhicule automobile (10) selon l'une des revendications précédentes, dans lequel un découplage de données à partir d'au moins une source de données externe au véhicule est prévu, en ce que l'au moins une source de données externe au véhicule est couplée par un propre domaine au réseau de données (11).

9. Procédé de fonctionnement d'un réseau de données (11) d'un véhicule automobile (10), dans lequel par le réseau de données (11) plusieurs appareils de commande (15) sont couplés entre eux pour l'échange de données de message (16, 21) et le réseau de données (11) est utilisé divisé en différents domaines (17) et par chacun des domaines (17) respectivement quelques-uns des appareils de commande (15) sont couplés au réseau de données (11) et ici dans chaque domaine (17) respectivement d'autres des appareils de commande (15) sont inclus et des passages de domaine (18) sont formés respectivement par une passerelle (14) et la passerelle (14) bloque l'échange de données de message (16, 21) entre les appareils de commande (15) de différents domaines (17) ou est autorisée seulement en fonction d'une vérification d'autorisation prévue au niveau d'au moins un passage de domaine (18),
un domaine entier (19) est en outre mis à disposition dans le réseau de données (11) et chacun des appareils de commande (15) est en outre couplé par le domaine entier (19) au réseau de données (11), dans lequel le domaine entier (19) est un espace d'adresse supplémentaire,
**caractérisé en ce que**
seule une communication unidirectionnelle d'un appareil de commande (SIM) autorisé à émettre aux appareils de commande (15) restants est prévu dans le domaine entier (19) et dans le domaine entier (19) les appareils de commande (15) restants acceptent comme valables seulement les données de message (21) qui ont été émises par l'appareil de commande (SIM) autorisé à émettre.
